# EUROPEAN PATENT SPECIFICATION

(11) **EP 2 995 028 B1**
(45) Date of publication and mention of the grant of the patent: **17.04.2019**
(21) Application number: 13884253.9
(22) Date of filing: 10.05.2013
(51) Int. Cl.: H04L 1/18

(54) **TUPLE RECOVERY**
TUPELRÜCKGEWINNUNG
RÉCUPÉRATION DE N-UPLETS

(43) Date of publication of application: 16.03.2016
(73) Proprietor: EntIT Software LLC, Sunnyvale, CA 94089 (US)
(72) Inventor: HSU, Meichun, Palo Alto, California 94304 (US); CHEN, Qiming, Palo Alto, California 94304 (US); CASTELLANOS, Maria Guadalupe, Palo Alto, California 94304 (US)
(74) Representative: Liesegang, Eva
(86) International application number: PCT/US2013/040524
(87) International publication number: WO 2014/182310

(56) References cited:
- WO-A1-00/72498
- US-A1- 2003 202 500
- US-A1- 2010 161 824
- US-A1- 2010 293 532
- US-B2- 7 835 273
- US-B2- 7 965 698

## Description

### Background

Data can be sent and/or received as a data stream. A data stream can include a continuous stream of data that can be sent tuple by tuple. A data stream of tuples can be processed in a particular order.
WO00/72498A1 refers to a sender that sends frames to a receiver over a possibly unreliable channel. A sent frame includes a frame identifier selected from a set of reusable frame identifiers. The sender stores the frame in a frame buffer for a buffer period. Upon receipt of the frame, the receiver determines, from the frame identifier, if a frame prior to the received frame was lost in transit. If the receiver determines that it missed a prior frame, the receiver sends the sender a negative acknowledgment for the missed prior frame. If the sender receives a negative acknowledgment, the sender determines the frame identifier of the missed prior frame and resends the missed frame if available in the frame buffer.

### Brief Description of the Drawings

Figure 1 is an illustration of an example of a system for tuple recovery according to the present disclosure.
Figure 2 is an illustration of an example of a flow chart for tuple recovery according to the present disclosure.
Figure 3 is an illustration of an example of a flow chart for tuple recovery according to the present disclosure.
Figure 4 is an illustration of an example of a processing resource and memory resource for tuple recovery according to the present disclosure.
Figure 5 is a flow chart of an example of a method for tuple recovery according to the present disclosure.
Figure 6 is a flow chart of an example of a method for tuple recovery according to the present disclosure.

### Detailed Description

The invention is defined and limited by the scope of appended claims 1-12. In the following description, any embodiment(s) referred to and not falling within the scope of the appended claims, is (are) merely example(s) useful to the understanding of the invention. A data system can include a continuous stream of data (e.g., a streaming system). An example streaming system can include a distributed streaming system which can perform parallel processing (e.g., perform processing of portions of a data stream simultaneously). The sequence and/or order of communicating the data stream from a particular source to a particular destination (e.g., the dataflow) can be represented as a graph structure having nodes and edges. A node can include an electronic device and/or computer readable instructions that are capable of sending, receiving and/or forwarding a data stream over a streaming system. In some examples, an electronic device can include a plurality of nodes.

The data stream can include a sequence of data events (e.g., tuples). The tuples can be sent in a particular order from one node to another. Each node can include a task (e.g., an instance) that receives and sends tuples. A data stream can include an operation. An operation can include computer readable instructions to perform a particular function. The execution of an operation can be divided into a number of intervals (e.g., states). An operation can include multiple tasks running in parallel to perform a function.

The task can monitor the flow of tuples in and out of the task at the node. A task can be upstream or downstream depending on the flow of the data. For example, a first task (e.g., an upstream task) can receive a first tuple. The first task (e.g., upstream task, source task) can process the first tuple and send the first tuple to a second task (e.g., a downstream task, target task). The second task (e.g., downstream task, target task) can then become an upstream task to a third task that is downstream from the second task. A task can include a cycle wherein each cycle includes a number of operations. The operations can include receiving a tuple, processing the received tuple, updating an execution state, and emitting a resulting tuple to a downstream task.

A task can process a tuple in a data stream tuple by tuple. A tuple may need to be processed by a task once. Tuples can be processed sequentially and a tuple prior in a sequence may need to be processed by a task before a subsequent tuple can be sent to the task. A task can save a record of the tuples received and sent. Some data streams can treat the whole streaming process as a single operation. This approach can experience the loss of intermediate results if a failure occurs.

Some data streams can have a downstream task send an acknowledgment to an upstream task that a tuple has been received. In such data streams, a subsequent tuple may not be sent until the acknowledgment is received. If a first tuple is never received, the second tuple may not be sent. If the acknowledgment is never received, the second tuple may not be sent. The acknowledgment approach can create latencies in the data stream.

In contrast, examples of the present disclosure can include sending a tuple from an upstream node to a downstream node. The state of a node (e.g., what tuples have been sent and/or received) can be recorded (e.g., checkpointed) when a tuple is sent and/or received. Maintaining a record of the last sent and/or received tuple can allow for a recovery at smaller intervals (e.g., a recovery of intermediate results without recovery of the whole streaming process) in the case of a node failure. In addition, the tuple can be sent from an upstream node to a downstream node without waiting for acknowledgment that a sequentially previous tuple has been received at the downstream node. For example, a first tuple can be sent from an upstream node to a downstream node. A second tuple can be sent from the upstream node to the downstream without the upstream node receiving an acknowledgment that the first tuple was received at the downstream node.

The streaming of data can avoid latencies in the system by sending data without first receiving an acknowledgment to proceed. Since failures are less frequent, acknowledgments are not necessary for each sent tuple. When a failure does occur, a process of asking an upstream node to resend a missing tuple can avoid loss of tuples that were not initially received.

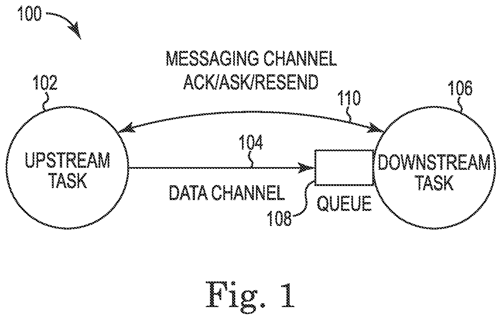

Figure 1 is an illustration of an example of a system 100 for tuple recovery according to the present disclosure. The system 100 can include an upstream task 102 (e.g., an upstream node) sending data (e.g., a tuple) over a data channel 104 to a downstream task 106 (e.g., a downstream node). A data channel 104 can include a communication link between an upstream node and a downstream node. The data channel 104 can be used to send tuples from the data stream in sequential order. The downstream task 106 can include a queue 108 (e.g., a buffer, a data storage) to store data received from the upstream task 102.

The downstream task 106 can send a message over a messaging channel 110 to the upstream task 102. A messaging channel 110 can include a communication link between an upstream node and a downstream node. The messaging channel 110 is used to send a request to resend a tuple, to send an acknowledgment that a tuple was received, and to resend the requested tuple. The messaging channel is used to send a tuple that is out of order based on the request to resend the tuple. The message can include a request ("ASK") to resend missing data (e.g., a tuple). The upstream task 102 can resend the requested missing data over the messaging channel 110 to the downstream task 106. When a downstream task 106 receives data over a data channel 104 and/or a messaging channel 110, the downstream task can send an acknowledgment ("ACK") over the messaging channel 110 indicating the data was received.

Data sent over a messaging channel 110 can be tracked logically by using the messaging channel as a virtual channel. A virtual channel can allow a task to be identified by a task alias (e.g., a task identifier). The task alias can be used in reasoning, tracking, and communicating the channel information logically.

The data (e.g., tuples) can be sent from the upstream task 102 to the downstream task 106 over the data channel 104 in a sequential order. For example, a first tuple can be sent first and a second tuple can be sent second. The data (e.g., tuples) can include message identifiers. The message identifiers can include sequence information. The sequence information can indicate an order of the data (e.g., the tuples). For example, a first message identifier associated with a first tuple can indicate that the first tuple should be sent first and/or processed first. In addition, a second message identifier associated with a second tuple can indicate that the second tuple should be sent second and/or processed second.

A sequence of data (e.g., tuples) can indicate missing data when data is out of sequence. For example, a sequentially first tuple can be sent from an upstream task 102 (e.g., associated with an upstream node) to a downstream task 106 (e.g., associated with a downstream node). In some examples, a task can be associated with a node. In some examples, a number of tasks can be associated with a node. A sequentially third tuple can be sent from the upstream task 102 to the downstream task 106. If the downstream task 106 did not receive a sequentially second tuple after the first tuple and before the third tuple, a missing tuple can be identified. An identified missing tuple can be requested over a messaging channel 110 by sending a request from a downstream task to an upstream task to resend the missing tuple.

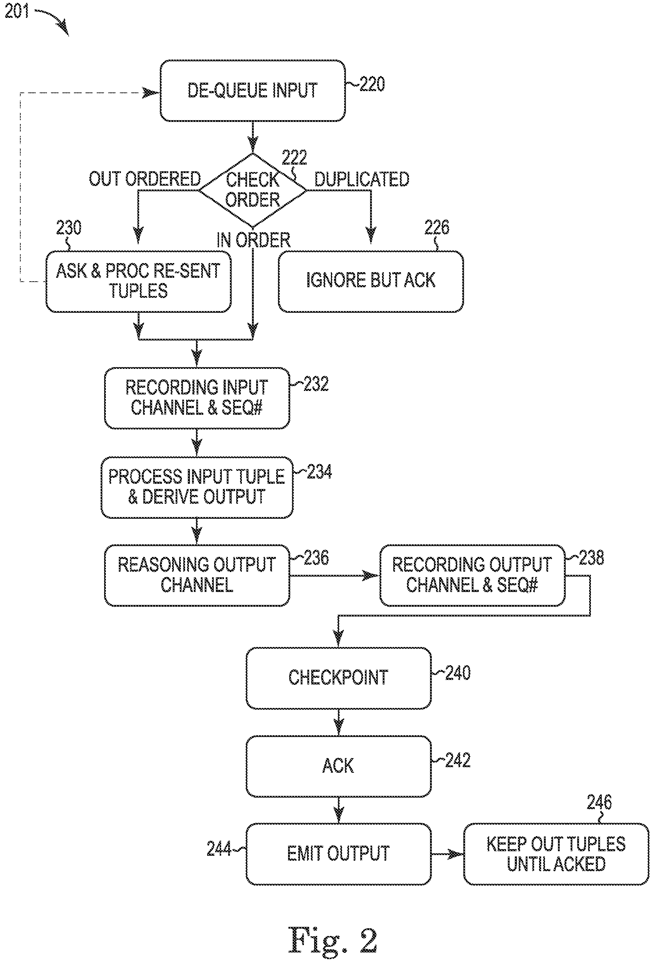

Figure 2 is an illustration of an example of a flow chart 201 for tuple recovery according to the present disclosure. A flow chart 201 is an example of how a task can process (e.g., perform an execution loop and/or operation for) a cycle of a tuple. A task can de-queue tuple input, at 220 (e.g., as illustrated by queue 108 in Figure 1). A sequential order of the tuple can be checked, at 222. If the tuple is a duplicate tuple (e g., the information in the received tuple has already been sent in a previous tuple), the tuple is not processed (e.g., ignored) and an acknowledgment ("ACK") can be sent over a messaging channel (e.g., 110 in Figure 1) to an upstream task, at 226. The acknowledgment can indicate to an upstream task (e.g., 102 in Figure 1) that the upstream task can release data associated with the duplicate tuple from the queue.

If the tuple sent to a downstream task is out of order 228 (e.g., an additional tuple should have been sent before the received tuple and is therefore missing), the downstream task can send a request (an "ASK") and the re-sent tuple can be processed, at 230. The processing of the re-sent tuple can include going through the operation of execution (e.g., flowchart 201) by returning (e.g., dotted arrow) to the first operation of de-queuing the input (e.g., at 220). For a re-sent tuple or a tuple that was sent in sequential order, an input channel (e.g., the channel that sent the tuple) can be recorded, at 232. An input channel (e.g., a data channel) can include the channel that the tuple was received through. The recorded input channel can allow the downstream task to determine what upstream task the tuple came from. A sequence number associated with the received tuple can also be recorded, at 232. A sequence number can include an indication of where in a sequence of tuples a tuple should be sent and received in a dataflow of tuples. A sequence identifier associated with the tuple can indicate the sequence number. A sequence number can indicate where in the dataflow stream a tuple should be sent. For example, a sequence number can indicate a tuple should be sent third in a flow of tuples.

The received tuple can be processed and output data based on the input tuple can be derived, at 234. Output data can include tuples sent from a task based on the tuples received. For example, a received tuple can indicate additional tuples and/or data to send along with the received tuple. The output data can reflect that indication. The output data can include the same data that was received. An output channel for the derived output can be determined (e.g., reasoned), at 236. An output channel can include a channel that the output data is sent through to a further downstream task. The output channel can be recorded and a sequence number associated with the derived output, at 238. A state of the task (e.g., current status of input tuples and output tuples) can be determined at a checkpoint 240. For example, a state of a task can include a number of tuples that were received and a number of tuples that are to be sent further downstream. At 242, an acknowledgment that a received tuple has been processed can be sent to an upstream task. The derived output can be emitted, at 244. An output tuple (e.g., derived output) can be stored until an acknowledgment is received indicating the emitted output has been received (e.g., acknowledged (ACKed)) at a downstream task.

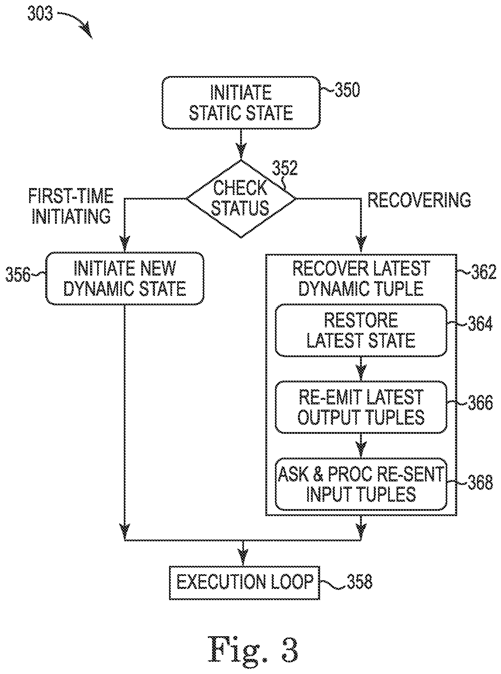

Figure 3 is an illustration of an example of a flow chart 303 for tuple recovery according to the present disclosure. The flow chart 303 can be an example of a process that runs before processing input tuples. A task can perform an initiating operation that can include initiating a static state, at 350. An initiating operation can be performed to use a second node when a first node experiences a failure. A static state can include an indication of how many tuples have been received, processed, and sent along with input channel and output channel data. The static state can determine what tuple the task should receive next and what tuple to send next. A task can check a status of the task, at 352. A status can include that the node is being used to process tuples as a new task for that node. A status can include that the node has experienced a failure and is restoring a previous state of the node. During a first-time initiation, a new dynamic state can be initiated, at 356. For example, a first node can experience a failure. A second node can be used to replace the first node. A first time initiation of the second node can include initiating a new dynamic state for the second node so the second node can process tuples for the task. The new dynamic state can include setting up the node to operate a task and process tuples. The task including a new dynamic state can proceed through an execution loop, at 358 (e.g., the process in Figure 2).

The process illustrated by the flowchart 303 can be used to recover from a failure of a task (e.g., a node). If a status check of the task indicates that the task has recovered from a failure, the process can include recovering a latest dynamic state, at 362. A latest dynamic state can include a state of the task when the task failed. The task can recover a latest dynamic state by restoring the latest state of the task at the time of failure, at 364. The latest state can determine which tuples to re-emit. The latest output tuples can be re-emitted to a downstream task (e.g., a target task of the recovered task), at 366. The process can include sending a request (an "ASK") to an upstream task (e.g., a source task) to resend an input tuple, at 368. The process can proceed to an execution loop, at 358 (e.g., the process illustrated in Figure 2).

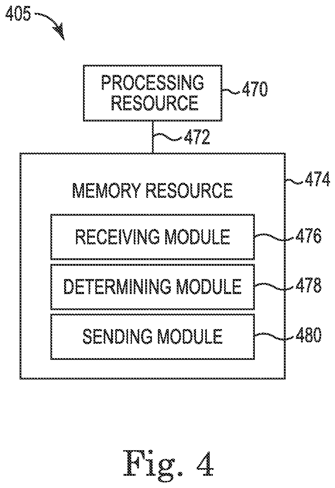

Figure 4 is an illustration of an example of a system 405 for tuple recovery according to the present disclosure. The system 405 can include software, hardware, firmware, and/or logic to perform a number of functions.

The system 405 can include any combination of hardware and program instructions configured to recover a tuple in a data stream. The hardware, for example can include a processing resource 470, and/or a memory resource 474 (e.g., computer-readable medium (CRM), machine readable medium (MRM), database, etc.) A processing resource 470, as used herein, can include any number of processors capable of executing instructions stored by a memory resource 474. Processing resource 470 may be integrated in a single device or distributed across devices. The program instructions (e.g., computer-readable instructions (CRI)) can include instructions stored on the memory resource 474 and executable by the processing resource 470 to implement a desired function (e.g., determine a plurality of attributes for a plurality of tuples, etc.).

The memory resource 474 can be in communication with a processing resource 470. The memory resource 474 can be in communication with the processing resource 470 via a communication path 472. The communication path 472 can be local or remote to a machine (e.g., a computing device) associated with the processing resource 470. Examples of a local communication path 472 can include an electronic bus internal to a machine (e.g., a computing device) where the memory resource 474 is one of volatile, non-volatile, fixed, and/or removable storage medium in communication with the processing resource 470 via the electronic bus.

The communication path 472 can be such that the memory resource 474 is remote from the processing resource (e.g., 470), such as in a network connection between the memory resource 474 and the processing resource (e.g., 470). That is, the communication path 472 can be a network connection. Examples of such a network connection can include a local area network (LAN), wide area network (WAN), personal area network (PAN), and the Internet, among others. In such examples, the memory resource 474 can be associated with a first computing device and the processing resource 470 can be associated with a second computing device (e.g., a Java® server).

A memory resource 474, as used herein, can include any number of memory components capable of storing instructions that can be executed by processing resource 470. Such memory resource 474 can be a non-transitory CRM. Memory resource 474 may be integrated in a single device or distributed across devices. Further, memory resource 474 may be fully or partially integrated in the same device as processing resource 470 or it may be separate but accessible to that device and processing resource 470. Thus, it is noted that the system 405 may be implemented on a user and/or a client device, on a server device and/or a collection of server devices, and/or on a combination of the user device and the server device and/or devices.

The processing resource 470 can be in communication 472 with a memory resource 474 storing a set of CRI executable by the processing resource 470, as described herein. The CRI can also be stored in remote memory managed by a server and represent an installation package that can be downloaded, installed, and executed. The system 405 can include memory resource 474, and the processing resource 470 can be coupled to the memory resource 474.

Processing resource 470 can execute CRI that can be stored on an internal or external memory resource 474. The processing resource 470 can execute CRI to perform various functions, including the functions described with respect to Figures 1-3, and 5-6. For example, the processing resource 470 can execute CRI to send a request to resend a tuple.

The CRI can include a number of modules 476, 478, 480. The number of modules 476, 478, 480 can include CRI that when executed by the processing resource 470 can perform a number of functions. In a number of examples, the number of modules 476, 478, 480 can include logic. As used herein, "logic" is an alternative or additional processing resource to execute the actions and/or functions, etc., described herein, which includes hardware (e.g., various forms of transistor logic, application specific integrated circuits (ASICs), etc.), as opposed to computer executable instructions (e.g., software, firmware, etc.) stored in memory and executable by a processor.

The number of modules 476, 478, 480 can be sub-modules of other modules. For example, the receiving module 476 and the determining module 478 can be sub-modules and/or contained within the same computing device. In another example, the number of modules 476, 478, 480 can comprise individual modules at separate and distinct locations (e.g., CRM, etc.).

An receiving module 476 can include CRI that when executed by the processing resource 470 can provide a number of receiving functions. The receiving module 476 can receive a first tuple and a second tuple at a downstream node.

A determining module 478 can include CRI that when executed by the processing resource 470 can perform a number of determining functions. The determining module 478 can determine a third tuple was not received that should have been received after the first tuple and before the second tuple. The determining module 478 can determine the third tuple should have been received based on sequence identifiers associated with the first and second tuples, for example.

A sending module 480 can include CRI that when executed by the processing resource 470 can perform a number of sending functions. The sending module 480 can send a request over a messaging channel (e.g., as illustrated by 110 in Figure 1) to resend a missing tuple. The messaging channel is a different channel than a data channel (e.g., 104 in Figure 1). The messaging channel is used to send acknowledgments that a tuple was received. The messaging channel is used to send requests to resend a tuple that is missing. The messaging channel is used to send the missing tuple in response to a request to resend the missing tuple.

A memory resource 474, as used herein, can include volatile and/or non-volatile memory. Volatile memory can include memory that depends upon power to store information, such as various types of dynamic random access memory (DRAM), among others. Non-volatile memory can include memory that does not depend upon power to store information.

The memory resource 474 can be integral, or communicatively coupled, to a computing device, in a wired and/or a wireless manner. For example, the memory resource 474 can be an internal memory, a portable memory, a portable disk, or a memory associated with another computing resource (e.g., enabling CRIs to be transferred and/or executed across a network such as the Internet).

For example, a processing resource 470 can be in communication with a memory resource 474, wherein the memory resource 474 includes a set of instructions and wherein the processing resource 470 is designed to carry out the set of instructions.

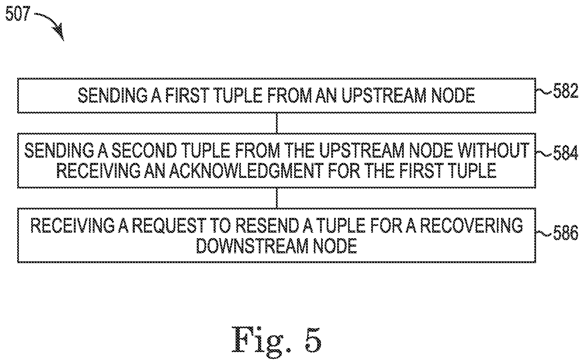

Figure 5 is a flow chart illustrating an example of a method 507 for tuple recovery according to the present disclosure. At 582, the method can include sending a first tuple from an upstream node. The first tuple can be a sequentially first tuple. That is, the first tuple can be sent first in an order of tuples.

At 584, the method 507 can include sending a second tuple from the upstream node without receiving an acknowledgment for the first tuple. The second tuple can be a sequentially third tuple. That is, the second tuple should be sent third in an order of tuples. If the second tuple is sent after the first tuple, the third tuple (e.g., a tuple that should be sent second) can be missing. The third tuple can be lost while sending the tuples from an upstream node to a downstream node. The third tuple can be lost due to a failure of the downstream node. For example, a first tuple can be sent to the downstream node. The downstream node can experience a failure while the upstream node is sending a sequentially second tuple. The downstream node can receive a sequentially third tuple after the first tuple and can be missing the sequentially second tuple.

At 586, the method 507 can include receiving a request to resend a tuple for recovering a downstream node. The request to resend a tuple can include sending a request over a messaging channel.

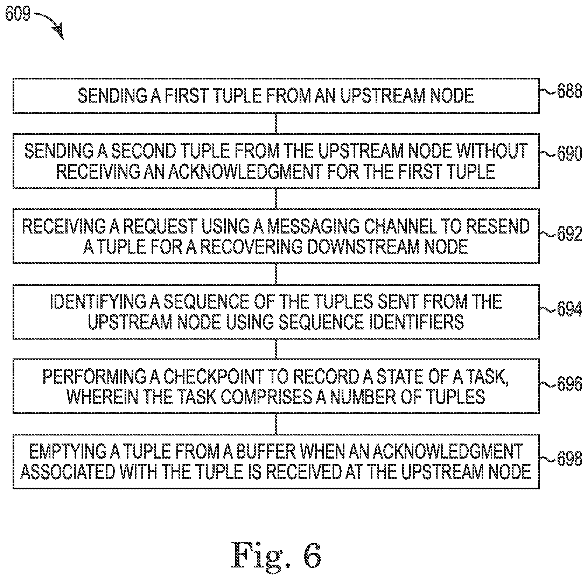

Figure 6 is a flow chart illustrating an example of a method 609 according to the present disclosure. At 688, the method 609 can include sending a first tuple from an upstream node. The first tuple can be a sequentially first tuple. That is, the first tuple can be sent first in an order of tuples. At 690, the method 609 can include sending a second tuple from the upstream node without receiving an acknowledgment for the first tuple.

At 692, the method 609 can include receiving a request using a messaging channel to resend a tuple for a recovering downstream node. The messaging channel is used to transfer a request to resend a tuple from a downstream node to an upstream node. The messaging channel is used to transfer an acknowledgment that indicates a downstream node received a sent tuple from an upstream node.

At 694, the method 609 can include identifying a sequence of the tuples sent from the upstream node using sequence identifiers. The sequence identifiers can be recorded during an execution loop (e.g., as illustrated by flow chart 201 in Figure 2). The sequence number associated with the sequence identifier can be recorded when the tuple input is received (e.g., 232 of Figure 2). The sequence number associated with the sequence identifier can be recorded when the tuple output is sent (e.g., 238 in Figure 2).

At 696, the method 609 can include performing a checkpoint to record a state of a task, wherein the task comprises a number of tuples. The checkpoint can consist of a list of objects (e.g., a list of inputs, outputs, etc.). When a check-in is performed, the list is serialized into a byte-array to write to a binary file. When a check-out is performed, the byte-array obtained from reading the file is de-serialized to the list of objects representing the state.

At 698, the method 609 can include emptying a tuple from a buffer when an acknowledgment associated with the tuple is received at the upstream node. The buffer of an upstream node can store a tuple that has already been sent to a downstream node. The buffer can store the tuple in case a request is received at the upstream node to resend the tuple. An acknowledgment that the tuple has been received at the downstream node can indicate that the upstream node buffer can empty the buffer of the received tuple.

In the detailed description of the present disclosure, reference is made to the accompanying drawings that form a part hereof, and in which is shown by way of illustration how examples of the disclosure may be practiced. These examples are described in sufficient detail to enable those of ordinary skill in the art to practice the examples of this disclosure, and it is to be understood that other examples may be used and the process, electrical, and/or structural changes may be made without departing from the scope of the present disclosure.

The specification examples provide a description of the applications and use of the system and method of the present disclosure. Since many examples can be made without departing from the scope of the system and method of the present disclosure, this specification sets forth some of the many possible example configurations and implementations. The scope of the invention is defined by the independent claims. Preferred embodiments are defined by the dependent claims.

## Claims

1. A method (507, 609) for tuple recovery, comprising:
sending a first tuple from an upstream node over a data channel (582, 688);
sending a second tuple from the upstream node over the data channel without receiving an acknowledgment for the first tuple (584, 690) wherein tuples are sent over the data channel in sequential order; and
**characterized by** receiving a request to resend a tuple for a downstream node using a messaging channel (586, 692) separate from the data channel; and
out of order sending the requested tuple over the messaging channel;
wherein the messaging channel is used to send a request to resend a tuple, to send an acknowledgment that a tuple was received, and to resend the requested tuple.

2. The method (609) of claim 1, comprising identifying a sequence of the tuples sent from the upstream node using sequence identifiers (694).

3. The method (609) of claim 1, comprising performing a checkpoint to record a state of a task, wherein the task comprises a number of tuples (696).

4. The method (609) of claim 1, comprising emptying a tuple from a buffer when an acknowledgment associated with the tuple is received at the upstream node (698).

5. A system (405) for tuple recovery, the system (405) comprising:
a processing resource (470);
a memory resource (474) coupled to the processing resource (470) to implement:
a receiving module (476) to receive over a data channel (104) a first tuple and a second tuple at a downstream node;
a determining module (478) to determine a third tuple was not received that should have been received after the first tuple and before the second tuple; and
**characterized by** a sending module (480) to send a request over a messaging channel (110) to resend the third tuple out of order over the messaging channel (110); and
receiving the requested tuple over the messaging channel;
wherein the messaging channel is separate from the data channel and is used to send a request to resend a tuple, to send an acknowledgment that a tuple was received, and to resend the requested tuple.

6. The system (405) of claim 5, comprising a checkpointing module to checkpoint a state of a task comprising sequence information associated with the received first and second tuples.

7. The system (405) of claim 5, comprising an acknowledging module to send an acknowledgment of a received duplicate tuple of an already received tuple at the downstream node, wherein the downstream node does not process the duplicate tuple.

8. The system (405) of claim 5, wherein the third tuple was not received due to a failure of the downstream node.

9. A non-transitory computer-readable medium storing a set of instructions executable by a processing resource (470) to cause a computer to:
receive over a data channel (104) a sequentially second tuple at a downstream node without sending an acknowledgment indicating the downstream node has received a sequentially first tuple, wherein tuples are sent over the data channel in sequential order;
**characterized in that** the processing resource causes the computer to send a request over a messaging channel (110) to resend the first tuple; and
receive the requested tuple over the messaging channel (110);
wherein the messaging channel is separate from the data channel and is used to send a request to resend a tuple, to send an acknowledgment that a tuple was received, and to resend the requested tuple.

10. The medium of claim 9, comprising instructions executable by a processing resource (470) to cause a computer to emit output tuples.

11. The medium of claim 9, comprising instructions executable by a processing resource (470) to cause a computer to record a sequence number of the tuple.

12. The medium of claim 9, comprising instructions executable by a processing resource (470) to cause a computer to store data in a buffer associated with sent tuples until an acknowledgment is received indicating the sent tuples were received.

## Patentansprüche

1. Verfahren (507, 609) für die Tupelwiederherstellung, umfassend:
Senden eines ersten Tupels von einem vorgelagerten Knoten über einen Datenkanal (582, 688);
Senden eines zweiten Tupels von dem vorgelagerten Knoten über den Datenkanal, ohne eine Bestätigung für das erste Tupel zu empfangen (584, 690), wobei Tupel in sequentieller Reihenfolge über den Datenkanal gesendet werden; und
**gekennzeichnet durch** den Empfang einer Aufforderung zum erneuten Senden eines Tupels für einen nachgelagerten Knoten unter Verwendung eines Nachrichtenkanals (586, 692) separat von dem Datenkanal; und
Senden des angeforderten Tupels über den Nachrichtenkanal außerhalb der Reihenfolge;
wobei der Nachrichtenkanal verwendet wird, um eine Aufforderung zum erneuten Senden eines Tupels zu senden, um eine Bestätigung zu senden, dass ein Tupel empfangen wurde, und um das angeforderte Tupel erneut zu senden.

2. Verfahren (609) nach Anspruch 1, umfassend das Identifizieren einer Sequenz der von dem vorgelagerten Knoten gesendeten Tupel unter Verwendung von Sequenzidentifikatoren (694).

3. Verfahren (609) nach Anspruch 1, umfassend das Durchführen einer Prüfung, um einen Zustand einer Aufgabe aufzuzeichnen, wobei die Aufgabe eine Anzahl an Tupeln umfasst (696).

4. Verfahren (609) nach Anspruch 1, umfassend das Leeren eines Tupels aus einem Puffer, wenn eine Bestätigung im Zusammenhang mit dem Tupel an dem vorgelagerten Knoten empfangen wird (698).

5. System (405) für die Tupelwiederherstellung, wobei das System (405) Folgendes umfasst:
eine Verarbeitungsressource (470);
eine Speicherressource (474), die an die Verarbeitungsressource (470) gekoppelt ist, um Folgendes zu implementieren:
ein Empfangsmodul (476), um über einen Datenkanal (104) ein erstes Tupel und ein zweites Tupel an einem nachgelagerten Knoten zu empfangen;
ein Bestimmungsmodul (478), um zu bestimmen, dass ein drittes Tupel nicht empfangen wurde, das nach dem ersten Tupel und vor dem zweiten Tupel hätte empfangen werden sollen; und
**gekennzeichnet durch** ein Sendemodul (480), um eine Aufforderung über einen Nachrichtenkanal (110) zum erneuten Senden des dritten Tupels außerhalb der Reihenfolge über den Nachrichtenkanal (110) zu senden; und
Empfangen des angeforderten Tupels über den Nachrichtenkanal;
wobei der Nachrichtenkanal separat von dem Datenkanal ist und verwendet wird, um eine Aufforderung zum erneuten Senden eines Tupels zu senden, um eine Bestätigung zu senden, dass ein Tupel empfangen wurde, und um das angeforderte Tupel erneut zu senden.

6. System (405) nach Anspruch 5, umfassend ein Prüfmodul, um einen Zustand einer Aufgabe, die Sequenzinformationen im Zusammenhang mit dem empfangenen ersten und zweiten Tupel umfasst, zu prüfen.

7. System (405) nach Anspruch 5, umfassend ein Bestätigungsmodul, um eine Bestätigung eines empfangenen doppelten Tupels eines bereits empfangenen Tupels an dem nachgelagerten Knoten zu senden, wobei der nachgelagerte Knoten das doppelte Tupel nicht verarbeitet.

8. System (405) nach Anspruch 5, wobei das dritte Tupel aufgrund eines Ausfalls des nachgelagerten Knotens nicht empfangen wurde.

9. Nichtflüchtiges computerlesbares Medium, auf welchem ein Satz an Anweisungen gespeichert ist, die durch eine Verarbeitungsressource (470) ausführbar sind, um einen Computer zu Folgendem zu veranlassen:
Empfangen, über einen Datenkanal (104), eines sequentiell zweiten Tupels an einem nachgelagerten Knoten, ohne eine Bestätigung zu senden, die angibt, dass der nachgelagerte Knoten ein sequentiell erstes Tupel empfangen hat, wobei Tupel über den Datenkanal in sequentieller Reihenfolge gesendet werden;
**dadurch gekennzeichnet, dass** die Verarbeitungsressource den Computer zu Folgendem veranlasst:
Senden einer Aufforderung über einen Nachrichtenkanal (110) zum erneuten Senden des ersten Tupels; und
Empfangen des angeforderten Tupels über den Nachrichtenkanal (110);
wobei der Nachrichtenkanal separat von dem Datenkanal ist und verwendet wird, um eine Aufforderung zum erneuten Senden eines Tupels zu senden, um eine Bestätigung zu senden, dass ein Tupel empfangen wurde, und um das angeforderte Tupel erneut zu senden.

10. Medium nach Anspruch 9, umfassend Anweisungen, die durch eine Verarbeitungsressource (470) ausführbar sind, um zu veranlassen, dass ein Computer ausgegebene Tupel aussendet.

11. Medium nach Anspruch 9, umfassend Anweisungen, die durch eine Verarbeitungsressource (470) ausführbar sind, um zu veranlassen, dass ein Computer eine Sequenznummer des Tupels aufzeichnet.

12. Medium nach Anspruch 9, umfassend Anweisungen, die durch eine Verarbeitungsressource (470) ausführbar sind, um zu veranlassen, dass ein Computer Daten in einem Puffer im Zusammenhang mit gesendeten Tupel speichert, bis eine Bestätigung empfangen wird, die angibt, dass die gesendeten Tupel empfangen wurden.

## Revendications

1. Procédé (507, 609) pour la récupération d'un tuple, comprenant :
l'envoi d'un premier tuple depuis un noeud amont via un canal de données (582, 688);
l'envoi d'un deuxième tuple depuis le noeud amont via le canal de données sans recevoir un accusé de réception pour le premier tuple (584, 690), les tuples étant envoyés via le canal de données dans un ordre séquentiel ; et
**caractérisé par** la réception d'une requête de renvoi d'un tuple pour un noeud aval en utilisant un canal de messagerie (586, 692) séparé du canal de données ; et
l'envoi dans le désordre du tuple demandé via le canal de messagerie ;
le canal de messagerie étant utilisé pour envoyer une requête de renvoi d'un tuple, pour envoyer un accusé de réception indiquant la réception d'un tuple et pour renvoyer le tuple demandé.

2. Procédé (609) selon la revendication 1, comprenant l'identification d'une séquence des tuples envoyés depuis le noeud amont en utilisant des identifiants de séquence (694).

3. Procédé (609) selon la revendication 1, comprenant la réalisation d'un point de contrôle pour enregistrer un état d'une tâche, la tâche comprenant un nombre de tuples (696).

4. Procédé (609) selon la revendication 1, comprenant le retrait d'un tuple d'un tampon lorsqu'un accusé de réception associé au tuple est reçu au niveau du noeud amont (698).

5. Système (405) pour la récupération d'un tuple, le système (405) comprenant :
une ressource de traitement (470) ;
une ressource de mémoire (474) couplée à la ressource de traitement (470) pour mettre en oeuvre :
un module de réception (476) pour recevoir un premier et un deuxième tuples à un noeud aval via un canal de données (104) ;
un module de détermination (478) pour déterminer qu'un troisième tuple n'a pas été reçu, lequel aurait dû être reçu après le premier tuple et avant le deuxième tuple ; et
**caractérisé par** un module d'envoi (480) destiné à envoyer, via un canal de messagerie (110), une requête de renvoi du troisième tuple dans le désordre via le canal de messagerie (110) ; et
la réception du tuple demandé via le canal de messagerie ;
le canal de messagerie étant séparé du canal de données et étant utilisé pour envoyer une requête de renvoi d'un tuple, pour envoyer un accusé de réception indiquant la réception d'un tuple et pour renvoyer le tuple demandé.

6. Système (405) selon la revendication 5, comprenant un module d'établissement de points de contrôle pour contrôler un état d'une tâche comprenant des informations de séquence associées aux premier et deuxième tuples reçus.

7. Système (405) selon la revendication 5, comprenant un module d'accusé de réception pour envoyer un accusé de réception d'un tuple reçu dupliqué à partir d'un tuple déjà reçu au niveau du noeud aval, le noeud aval ne traitant pas le tuple dupliqué.

8. Système (405) selon la revendication 5, dans lequel le troisième tuple n'a pas été reçu en raison d'une défaillance du noeud aval.

9. Support non transitoire lisible par ordinateur mémorisant un ensemble d'instructions exécutables par une ressource de traitement (470) pour amener un ordinateur à :
recevoir, un deuxième tuple dans l'ordre séquentiel à un noeud aval via un canal de données (104) sans envoyer d'accusé de réception indiquant que le noeud aval a reçu un premier tuple dans l'ordre séquentiel, des tuples étant envoyés via le canal de données dans un ordre séquentiel ;
**caractérisé en ce que** la ressource de traitement amène l'ordinateur à
envoyer une requête de renvoi du premier tuple via un canal de messagerie (110) ; et
recevoir le tuple demandé via le canal de messagerie (110) ;
le canal de messagerie étant séparé du canal de données et étant utilisé pour envoyer une requête de renvoi d'un tuple, pour envoyer un accusé de réception indiquant la réception d'un tuple et pour renvoyer le tuple demandé.

10. Support selon la revendication 9, comprenant des instructions exécutables par une ressource de traitement (470) pour amener un ordinateur à émettre des tuples de sortie.

11. Support selon la revendication 9, comprenant des instructions exécutables par une ressource de traitement (470) pour amener un ordinateur à enregistrer un numéro de séquence du tuple.

12. Support selon la revendication 9, comprenant des instructions exécutables par une ressource de traitement (470) pour amener un ordinateur à mémoriser des données dans un tampon associé à des tuples envoyés jusqu'à ce qu'un accusé de réception soit reçu indiquant que les tuples envoyés ont été reçus.
